# EUROPÄISCHE PATENTSCHRIFT

(11) **EP 0 525 452 B1**
(45) Veröffentlichungstag und Bekanntmachung des Hinweises auf die Patenterteilung: **14.12.1994**
(21) Anmeldenummer: 92111545.7
(22) Anmeldetag: 08.07.1992
(51) Int. Cl.: B60J 3/02

(54) **Sonnenblende für Fahrzeuge**
Sun visor for vehicles
Pare-soleil pour véhicule

(30) Priorität: 30.07.1991 DE 4125185
(43) Veröffentlichungstag der Anmeldung: 03.02.1993
(73) Patentinhaber: Gebr. Happich GmbH, D-42097 Wuppertal (DE)
(72) Erfinder: Viertel, Lothar, W-6636 Altforweiler (DE); Welter, Patrick, F-57730 La Chambre (FR)

(56) Entgegenhaltungen:
- EP-A- 0 270 508
- EP-A- 0 340 195

## Beschreibung

Die Erfindung bezieht sich auf eine Sonnenblende für Fahrzeuge der im Oberbegriff des Patentanspruchs 1 näher angegebenen und z.B. durch die DE-A-27 03 447 bekannt gewordenen Art.

Gegenüber dem genannten Stand der Technik soll durch die Erfindung eine Sonnenblende mit einem Sonnenblendenkörper geschaffen werden, der, trotz seiner Ausstattung mit einer Spiegelbaugruppe, einen besonders flachen Aufbau und ein besonders gutes Aussehen aufweisen soll.

Die zur Lösung dieser Aufgabe vorgesehenen Maßnahmen sind im Patentanspruch 1 angegeben. Zweckmäßige und vorteilhafte Weiterbildungen der Erfindung sind in den Unteransprüchen aufgezeigt.

Ein Ausführungsbeispiel der Erfindung wird im folgenden anhand der Zeichnung näher erläutert. Es zeigen:

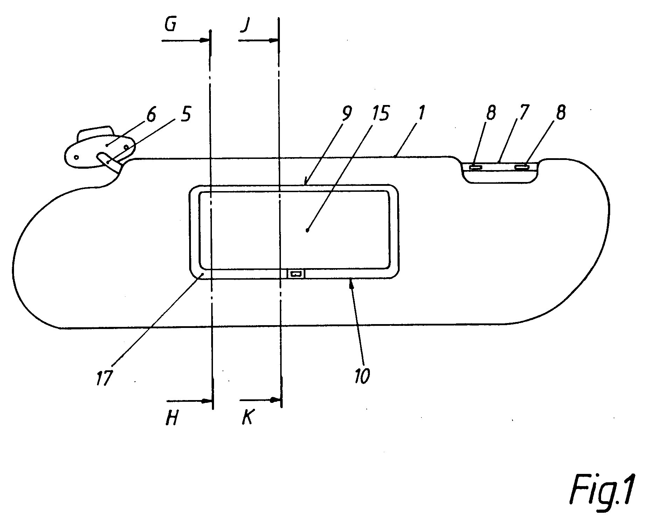

- Fig. 1: eine Ansicht der Sonnenblende mit im Sonnenblendenkörper angeordneter Spiegelbaugruppe,
- Fig. 2: eine auseinandergezogene Darstellung der Spiegelbaugruppe,

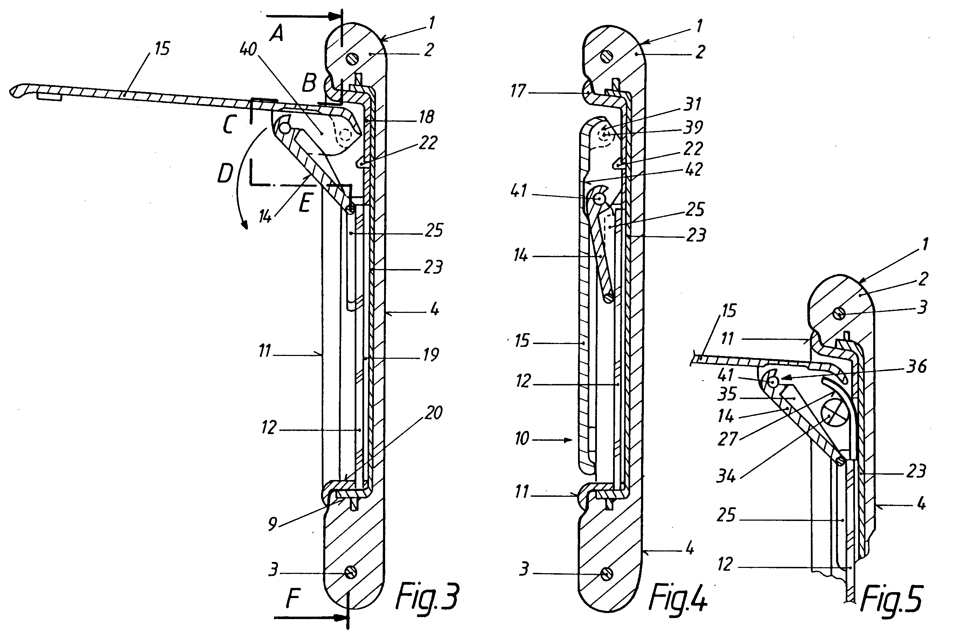

- Fig. 3: einen Schnitt, etwa folgend der Linie G - H in Fig. 1 mit geöffnetem Deckel,
- Fig. 4: einen Schnitt, etwa folgend der Linie G - H in Fig. 1 mit geschlossenem Deckel,
- Fig. 5: einen Teilschnitt, etwa folgend der Linie I - K in Fig. 1 mit geöffnetem Deckel,
- Fig. 6: einen Schnitt, etwa folgend der Linie A - F in Fig. 3 und
- Fig. 7: eine Einzelheit in Pfeilrichtung Z.

Die neue Sonnenblende besteht aus einem Sonnenblendenkörper 1 mit einem Kern 2 aus Schaummaterial, einer im Kern 2 eingebetteten Verstärkungseinlage 3 und einer Hülle 4 aus PVC-Folie, Stoff, Leder od.dgl. Zur schwenk- und klappbaren Befestigung an einer Fahrzeugkarosserie dient eine im Sonnenblendenkörper 1 drehbar angeordnete Achse 5 und ein darauf schwenkbar angeordnetes Böckchen 6 mit Anschraublöchern. Am entgegengesetzten Ende der Sonnenblende ist eine Gegenlagerachse 7 angeordnet, die zum lösbaren und drehbaren Einhängen in ein nicht gezeigtes Gegenlagerböckchen an der Fahrzeugkarosserie dient. Der im Sonnenblendenkörper 1 drehbar gelagerte Schenkel der Achse 5 und die Gegenlagerachse 7 verlaufen fluchtend entlang eines Randbereichs des Sonnenblendenkörpers und bilden die Achse beim Herunterklappen der Sonnenblende gegen eine Windschutzscheibe, um sie von der Nichtgebrauchslage im Bereich des Dachhimmels in die Gebrauchslage im Bereich der Windschutzscheibe zu bewegen. Der Sonnenblendenkörper 1 läßt sich auch gegen ein Seitenfenster verschwenken, indem die Gegenlagerachse 7 aus dem Gegenlagerböckchen ausgehängt und um den im Böckchen 6 gelagerten Schenkel der Achse 5 gegen das Seitenfenster geschwenkt wird.

Auf der Gegenlagerachse 7 sind elektrische Kontakte 8 angeordnet, die mit entsprechenden Kontakten im Gegenlagerböckchen zusammenwirken und zur Stromversorgung einer Beleuchtungseinrichtung 13 dienen, die im Sonnenblendenkörper 1 angeordnet ist. Die Stromzuführung für die Beleuchtungseinrichtung 13 kann in bekannter Weise auch durch die Achse 5 erfolgen.

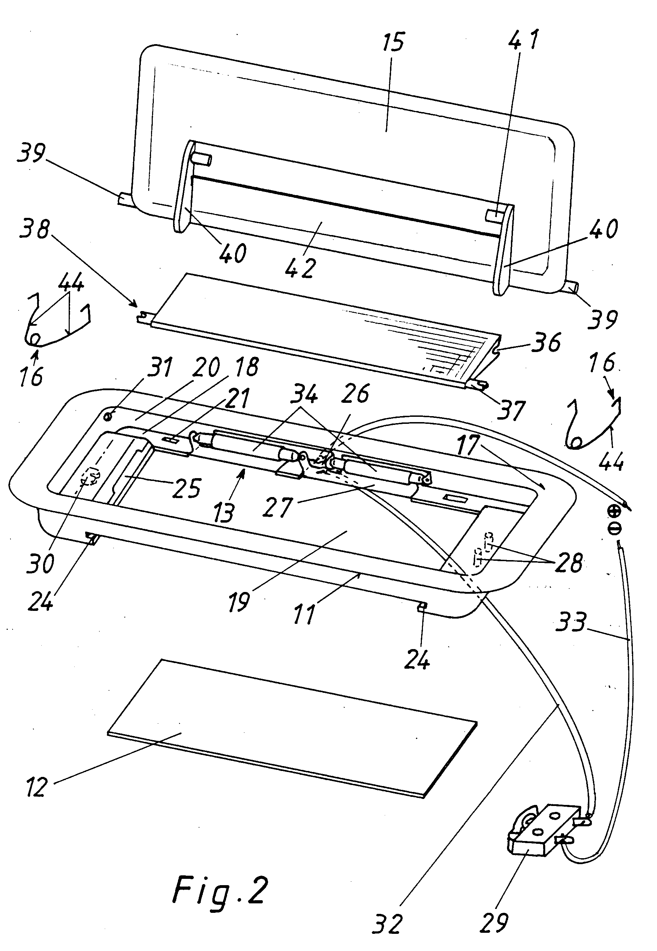

Im Sonnenblendenkörper 1 befindet sich eine Ausnehmung 9 mit einer darin eingesetzten Spiegelbaugruppe 10. Wie insbesondere Fig. 2 zeigt, umfaßt die Spiegelbaugruppe 10 eine Wanne 11 und von dieser getragene Elemente, nämlich einen Spiegel 12, eine elektrische Beleuchtungseinrichtung 13, eine Leuchtscheibe 14, einen Klappdeckel 15 sowie Drahtfedern 16.

Die Wanne 11, die aus einem Kunststoff-Spritzgußteil besteht, weist einen, sich auf dem Sonnenblendenkörper 1 abstützenden Umlaufflansch 17, einen Boden 18 mit einer relativ großen, der Materialersparnis dienenden Öffnung 19 und umlaufende Wandungen 20 auf, die den Umlaufflansch 17 mit dem Boden 18 verbinden. Im Boden 18 befinden sich mehrere, verteilt angeordnete Stecköffnungen 21 zum Einrasten von Rastnasen 22, die sich an einem, im Kern 2 angeordneten Halteelement 23 befinden. Durch die Rastnasen 22 wird die Wanne 11 und damit die gesamte Spiegelbaugruppe 10 zuverlässig am Sonnenblendenkörper 1 festgelegt.

Die Wanne 11 weist weiterhin eine schwalbenschwanzförmige Einschubnut 24 für den Spiegel 12 und in seitlichen Bereichen als Schlitze ausgebildete Kulissenführungen 25 auf. Ferner sind an der Wanne 11 Zungen 26 zur Halterung von zur Beleuchtungseinrichtung 13 gehörenden Reflektoren 27, Stifte 28 zur Halterung eines ebenfalls zur Beleuchtungseinrichtung gehörenden Mikroschalters 29, Aufnahme-sockel 30 für die einendige Festlegung der Drahtfedern 16 und Lageröffnungen 31 zum Anlenken des Klappdeckels 15 ausgebildet.

Der Spiegel 12, der bevorzugt als Glasspiegel ausgebildet ist, besitzt eine rechteckige Form und ist geschützt im Bereich des Wannenbodens 18 aufgenommen. Die Einschiebenuten 24 stellen lediglich eine beispielhafte Halterung für den Spiegel dar, denn es ist natürlich auch möglich, den Spiegel durch an der Wanne 11 angeformte Klipsnasen od.dgl. zu halten.

Die elektrische Beleuchtungseinrichtung 13 besteht aus den erwähntett Reflektoren 27, die angelötete elektrische Leiter 32,33 und Soffitten 34 (z.B. 3 Watt, 12 Volt, 6mm Durchmesser) tragen, und aus dem schon erwähnten Mikroschalter 29, über den der Leiter 32 geführt ist. Die freien Leiterenden sind beispielsweise mit den Kontakten 8 elektrisch leitend verbunden.

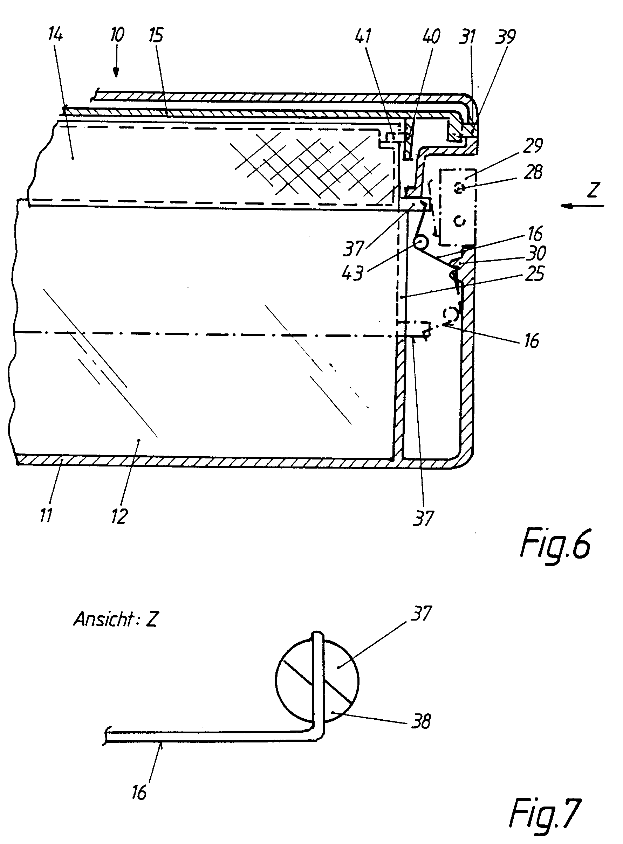

Die Leuchtscheibe 14 besteht aus einem für diesen Zweck üblichen lichtdurchlässigen Material, vorzugsweise Kunststoff-Material mit geriffelter Oberfläche. Die Leuchtscheibe 14 ist im allgemeinen rechteckig und weist an den Schmalseiten rechtwinklig nach hinten abstehende Randleisten 35 auf. Diese Randleisten 35 besitzen an ihren, der oberen Randkante der Leuchtscheibe 14 benachbarten Endbereichen, jeweils eine hinterschnittene Lageröffnung 36. In Verlängerung der unteren Leuchtscheibenkante sind beidseitig überstehende Zapfen 37 angeformt, die in die Kulissenführungen 25 der Wanne 11 eingreifen und geführt sind. Die Zapfen 37 dienen auch der einendigen Halterung der Drahtfedern 16, wozu sie Stecköffnungen 38 aufweisen, deren besondere Gestaltung in Fig. 7 gezeigt ist. Einer der Zapfen 37 ist zudem dafür vorgesehen, den auf den Stiften 28 befestigten Mikroschalter 29 beim Öffnen und Schließen des Klappdeckels 15 zu betätigen, um auf diese Weise den Stromkreis für die Beleuchtungseinrichtung 13 zu schließen oder zu unterbrechen.

Der Klappdeckel 15, der als Kunststoff-Spritzgußteil ausgebildet ist, besitzt eine etwa rechteckige Form und eine Größe, die es gestattet, die Wannenöffnung und die in der Wanne 11 angeordneten Elemente abzudecken. Etwa in Verlängerung seiner unteren Längskante weist der Klappdeckel 15 zwei, beidseitig überstehend angeformte Lagerzapfen 39 auf, die dazu bestimmt sind, in die Lageröffnungen 31 der Wanne 11 einzugreifen und damit die Klappachse für den Klappdeckel 15 zu definieren. Auf seiner Rückseite weist der Klappdeckel 15 weiterhin zwei, seiner unteren Randkante benachbarte, senkrecht von der Deckelebene abstehende Lagerböckchen 40 mit daran angeformten Lagerzapfen 41 auf, die sich parallel zu den Lagerzapfen 39 erstrecken und mit ihren freien Enden gegeneinander gerichtet sind. Zwischen den Lagerböckchen 40, deren Abstand voneinander der Leuchtscheibenlänge angepaßt ist, erstreckt sich ein Streifen 42 mit verringerter Deckelwanddicke. Die Lagerzapfen 41 sind dazu bestimmt, in die Lageröffnungen 36 der Leuchtscheibe 14 eingerastet, zum Soffittenwechsel auch ausgerastet zu werden.

Die Drahtfedern 16 besitzen zumindest eine mittige Schraubenwindung 43 und zwei von dieser wegstrebende Schenkel 44 mit verkröpften Enden, welche zum einen in die Stecköffnungen der Aufnahmesockel 30 und zum anderen in die Stecköffnungen 38 der Zapfen 37 einsteckbar sind.

Die beschriebenen Einzelelemente der Sonnenblende und insbesondere der Spiegelbaugruppe sind einfach, problemlos und kostengünstig zu fertigen oder bezüglich des Mikroschalters 29, der Soffitten und gegebenenfalls auch der Federn 16 zu beziehen. Auch der Zusammenbau der Teile geht schnell und einfach vonstatten, was sich aus der nachfolgenden Erläuterung ergibt.

In die Wanne 11 werden zunächst die beiden Reflektoren 27 (auf Umschlag, Baugleichheit) mit den daran angelöteten Leitern 32,33 (das Löten kann auch durch Steckverbindungen ersetzt werden) eingeschoben und durch die angespritzten Zungen 26 gehalten. Es erfolgt sodann das Aufsetzen des Mikroschalters 29 auf die Stifte 28, das Einsetzen der Soffitten 34 und das Einschieben des Spiegels 12 in die Einschiebenut 24. Die Leuchtscheibe 14 wird mit den Zapfen 37 in die Kulissenführung 25 der Wanne 11 eingesteckt. Auch der Klappdeckel 15 wird durch eine Steckverbindung an der Wanne 11 angebracht, und zwar durch Einstecken der Lagerzapfen 39 in die Lageröffnungen 31. In der geöffneten Deckellage kann dann durch Einklipsen der Lagerzapfen 41 in die hinterschnittenen Lageröffnungen 36 eine gelenkige Verbindung zwischen dem Klappdeckel 15 und der Leuchtscheibe 14 hergestellt werden. Von der Wannenrückseite her werden dann die Drahtfedern 16 montiert, indem die abgewinkelten Schenkelenden in die Schlitzöffnungen der Aufnahmesockel 30 einerseits und der Zapfen 37 andererseits eingesteckt werden. Die beiden Drahtfedern 16, die auch als Totpunktfedern bezeichnet werden können, erzeugen aufgrund ihrer Dimensionierung und Vorspannung beim Öffnen und Schließen des Deckels einen permanenten Druck und halten damit den Klappdeckel 15 in der geöffneten und in der geschlossenen Lage. Beim Überführen des Klappdeckels 15 von der einen in die andere Endlage wechseln die Drahtfedern 16 ihr Position in einer aus Fig. 6 ersichtlichen Weise. Die Spiegelbaugruppe 10 ist dann lediglich noch in die Ausnehmung 9 des Sonnenblendenkörpers 1 einzustecken, wobei es zur Verriegelung mit den Klipsnasen 22 kommt.

Die neue Sonnenblende weist somit eine Spiegelbaugruppe mit einer Leuchtscheibe 14 auf, die beim Öffnen und Schließen des Klappdeckels 15 durch Anlenkungen am Klappdeckel 15 und an der Wanne 11 zwangsgeführt wird. Beim Öffnen des Klappdeckels 15 wird die Leuchtscheibe 14 ausgefahren und stellt sich in eine vorbestimmte Schräglage, in der die Reflektoren 27 und Soffitten 34 abgedeckt sind. Eine seitliche Lichtabschottung wird durch die Lagerböckchen 40 bewirkt, die somit eine Doppelfunktion erfüllen. Beim Schließen des Klappdeckels 15 wird die Leuchtscheibe 14 eingefahren, die sich dann in einer angenähert parallelen Ausrichtung zwischen Spiegel 12 und Klappdeckel 15 befindet, und zwar unterhalb der Beleuchtungseinrichtung, was wesentlich ist.

Die beschriebene Sonnenblende hat den besonderen Vorteil, daß die Spiegelbaugruppe eine gegenüber bekannten Vorbildern wesentlich verringerte Bauhöhe aufweist, womit auch wesentlich dünnere Sonnenblenden als bisher üblich, wie von der Abnehmerschaft gefordert, zur Verfügung gestellt werden können.

## Patentansprüche

1. Sonnenblende für Fahrzeuge mit einem Sonnenblendenkörper (1), der auf einer Breitseite eine Ausnehmung (9) mit einer darin eingesetzten Spiegelbaugruppe (10) aufweist, die eine Wanne (11) und von dieser getragene Elemente, nämlich einen Spiegel (12), eine elektrische Beleuchtungseinrichtung (13) oberhalb des Spiegels, eine Leuchtscheibe (14) zum Abdecken der Beleuchtungseinrichtung, einen Klappdeckel (15) zum Abdecken des Spiegels und der Leuchtscheibe sowie den Klappdeckel sowohl in der geöffneten als auch geschlossenen Stellung haltende Mittel umfaßt, dadurch gekennzeichnet, daß die Leuchtscheibe (14) einerseits schwenkbeweglich am Klappdeckel (15) und andererseits schwenk- und schiebebeweglich an der Wanne (11) angeordnet ist, so daß dieselbe durch Öffnen des Klappdeckels aus einer Ruheposition, in der sie sich unterhalb der Beleuchtungseinrichtung (13) zwischen dem Spiegel (12) und dem Klappdeckel (15) befindet, in eine die Beleuchtungseinrichtung (13) abdeckende Gebrauchsposition überführbar ist.

2. Sonnenblende nach Anspruch 1, dadurch gekennzeichnet, daß die Leuchtscheibe (14), die rechteckig ausgebildet ist, mit ihrer oberen Längskante an der Rückseite des Klappdeckels (15) parallel zu dessen Klappachse, jedoch beabstandet zu dieser verlaufend, angelenkt ist und in Verlängerung ihrer unteren Längskante beidseitig überstehende Zapfen (37) aufweist, die in in der Wanne (11) ausgebildete Kulissenführungen (25) eingreifen.

3. Sonnenblende nach Anspruch 1 oder 2, dadurch gekennzeichnet, daß die Leuchtscheibe (14) an den Schmalseiten rechtwinklig abstehende Randleisten (35) mit hinterschnittenen Lageröffnungen (36) zum Einrasten von am Deckel (15) abstehend angeordneten Lagerzapfen (41) aufweist.

4. Sonnenblende nach wenigstens einem der Ansprüche 1 bis 3, dadurch gekennzeichnet, daß die an der unteren Längskante der Leuchtscheibe (14) überstehend angeordneten Zapfen (37) jeweils eine stirnseitige Stecköffnung (38) für die einendige Aufnahme jeweils einer anderendig in einer wannenseitigen Stecköffnung (30) aufgenommenen Drahtfeder (16) aufweisen, wobei die Drahtfedern so gebogen und angeordnet sind, daß sie jeweils nach Überschreiten der Totpunktlage die Leuchtscheibe (14) in der Ruhe- bzw. Gebrauchsposition und damit über die Leuchtscheibe den Klappdeckel (15) in der geschlossenen bzw. geöffneten Stellung halten.

5. Sonnenblende nach wenigstens einem der Ansprüche 1 bis 4, dadurch gekennzeichnet, daß durch einen der an der unteren Längskante der Leuchtscheibe (14) überstehend angeordneten Zapfen (37) bei seiner Bewegung durch die Kulissenführung (25) ein an der Wanne (11) befestigter Mikroschalter (29) zum Ein- bzw. Ausschalten der Beleuchtungseinrichtung (13) betätigbar ist.

## Claims

1. Sun visor for vehicles, having a sun visor body (1) exhibiting, on a wide side, a recess (9) with a mirror assembly (10) inserted therein, which mirror assembly comprises a tray (11) and elements supported thereby, namely a mirror (12), an electric lighting device (13) above the mirror, an illuminated screen (14) for covering the lighting device, a hinged cover (15) for covering the mirror and the illuminated screen, and means which hold the hinged cover both in the open and in the closed position, characterized in that the illuminated screen (14) is disposed, on the one hand, pivotably on the hinged cover (15) and, on the other hand, pivotably and slidably on the tray (11), so that the said illuminated screen can be conveyed, by virtue of the hinged cover being opened out of a rest position in which it is located between the mirror (12) and the hinged cover (15), beneath the lighting device (13), into a position of use covering the lighting device (13).

2. Sun visor according to Claim 1, characterized in that the illuminated screen (14), which is rectangularly configured, is attached by its upper longitudinal edge to the rear side of the hinged cover (15), running parallel to its hinged axis yet at a distance apart from this, and exhibits, in extension of its lower longitudinal edge, journals (37) which project on both sides and engage in connecting link guides (25) configured in the tray (11).

3. Sun visor according to Claim 1 or 2, characterized in that the illuminated screen (14) exhibits on the narrow sides marginal mouldings (35), which protrude at right angles and have undercut bearing openings (36) for the engagement of bearing journals (41) disposed in protruding arrangement on the cover (15).

4. Sun visor according to at least one of Claims 1 to 3, characterized in that the journals (37) disposed in projecting arrangement on the lower longitudinal edge of the illuminated screen (14) respectively exhibit a frontal plug-in opening (38) for the one-ended reception of a respective wire spring (16), which is received at the other end in a plug-in opening (30) on the tray side, the wire springs being bent and disposed such that they respectively, after the dead centre position has been passed, hold the illuminated screen (14) in the rest position or position of use and hence, by way of the illuminated screen, hold the hinged cover (15) in the closed or open position.

5. Sun visor according to at least one of Claims 1 to 4, characterized in that, in order to switch the lighting device (13) on or off, a microswitch (29) fastened to the tray (11) can be actuated by one of the journals (37) disposed in projecting arrangement on the lower longitudinal edge of the illuminated screen (14), as the said journal moves through the connecting link guide (25).

## Revendications

1. Pare-soleil pour véhicule automobile comportant un corps (1), qui présente sur un grand côté un évidement (9) avec un bloc-miroir (10) placé à l'intérieur, lequel comprend un bac (11) et des éléments portés par celui-ci, à savoir un miroir (12) , un dispositif d'éclairage électrique (13) au-dessus du miroir, une vitre éclairante (14) recouvrant le dispositif d'éclairage, un couvercle abattant (15) recouvrant le miroir et la vitre éclairante ainsi que des moyens maintenant le couvercle abattant tant en position ouverte qu'en position fermée caractérisé en ce que la vitre éclairante (14) est montée de manière à pouvoir d'une part pivoter sur le couvercle abattant (15) et d'autre part à pivoter et à coulisser sur le bac (11), de manière qu'à l'ouverture du couvercle abattant, ce bac puisse passer d'une position de repos, dans laquelle il se trouve au-dessous du dispositif d'éclairage (13) entre le miroir (12) et le couvercle abattant (15), dans une position d'utilisation recouvrant le dispositif d'éclairage (13).

2. Pare-soleil selon la revendication 1, caractérisé en ce que la vitre éclairante (14), qui est rectangulaire, s'articule avec son grand côté supérieur sur la face arrière du couvercle abattant (15), parallèlement à son axe de rabattement, mais s'étend à une certaine distance de celui-ci et comporte dans le prolongement de son grand côté inférieur, des tenons (37) dépassant des deux côtés qui s'engagent dans des guidages à coulisse (25) formés dans le bac (11).

3. Pare-soleil selon les revendications 1 ou 2, caractérisé en ce que la vitre éclairante (14) présente, sur les petits côtés, des baguettes de bordure (35), dépassant à angle droit, avec des ouvertures d'appui (36) détalonnées pour l'encliquetage de tourillons (41) placés saillants sur le couvercle (15).

4. Pare-soleil selon l'une au moins des revendications 1 à 3, caractérisé en ce que les tenons (37), en surplomb sur le grand côté inférieur de la vitre éclairante (14), présentent chacun une ouverture d'enfichage (38) frontale pour loger à une extrémité un ressort à boudin (16) logé à son autre extrémité dans une ouverture d'enfichage (30) côté bac, les ressorts à fil étant cintrés et placés de manière à maintenir, après dépassement de la position de point mort, la vitre éclairante (14) en position de repos ou d'utilisation et donc, par l'intermédiaire de la vitre éclairante, le couvercle abattant (15), en position fermée ou ouverte.

5. Pare-soleil selon l'une au moins des revendications 1 à 4, caractérisé en ce que par un tenon (37), placé dépassant sur le grand côté inférieur de la vitre éclairante (14), lors de son déplacement à travers le guidage à coulisse (25), un micro-interrupteur (29), fixé sur le bac (11), peut être actionné pour enclencher ou couper le dispositif d'éclairage (13).
